Europäisches Patentamt

European Patent Office

Office européen des brevets

(11) Publication number: 0 314 969 A2

# EUROPEAN PATENT APPLICATION

(21) Application number: 88117228.2

(51) Int. Cl.⁴: **F16N 25/02 , F16N 7/34**

(22) Date of filing: 17.10.88

(30) Priority: 05.11.87 US 116996

(43) Date of publication of application:
10.05.89 Bulletin 89/19

(84) Designated Contracting States:
AT BE DE FR GB IT NL SE

(71) Applicant: DROPSA S.p.A.
Via Massimiano 25
I-20134 Milano(IT)

(72) Inventor: Divisi, Gualtiero
Via Massimiano, 25
I-20134 Milan(IT)

(74) Representative: Giambrocono, Alfonso, Dr.
Ing. et al
Ing. A. Giambrocono & C. S.r.l. Via Rosolino
Pilo 19/B
I-20129 Milano(IT)

(54) **Air oil progressive series feeder block.**

(57) A lubricant feeder block assembly (10) for feeding a lubricant to an object includes support means (12) forming at least one support block (14). A first aperture means (20) forms at least one first aperture in the support means (12) for allowing lubricant to enter the support means (12). A second aperture means (22) form at least one second aperture in the support means (12) for allowing lubricant to exit the support means (12). A valve means (28) is disposed within the support means (12) for distributing the lubricant between the first aperture means (20) and second aperture means (22). According to the invention third aperture means forms at least one third aperture in the support means (12) for allowing air to enter and be mixed with the lubricant within the support means (12) before exiting the second aperture means (22).

Fig. 1

## Air oil progressive series feeder block

The subject invention relates to a progressive lubricant feeder, and particularly, to a series progressive feeder for mixing lubricant with air.

Series progressive lubricant feeder blocks have existed for several decades. These feeder or metering blocks distribute a predetermined amount of lubricant to an object. One such example of a progressive lubrificant feeder is disclosed in U.S.-A- 3,467,222, issued September 15, 1969, in the name of Gruber. This patent discloses a series of individually connected base elements. Each individual base element includes a spool valve disposed within the base element. An end block is connected serially to one end of the base elements and includes an aperture to allow the lubricant to enter the feeder block assembly. Apertures in each end of the base allow the lubricant to exit on each side.

In operation, when lubricant enters the inlet of the end block, the first spool valve is shifted to one side to exhaust a metered amount of lubricant from the first base element. Next, the second spool valve in the second base element shifts to the same side to distribute or exhaust a second metered amount of lubricant from the second base element. This cycle is repeated for a plurality of individual base elements connected together.

In various applications, it is desired to reduce the amount of lubricant used or to cool the lubricant. Currently, this is accomplished by mixing air with the lubricant to spray the lubricant onto the object. Typically, a mixing valve is used to mix the air with the lubricant downstream of the lubricant feeder assembly. A conventional mixing valve has an internal T-shaped configuration to allow the air and lubricant to be mixed therein. A first conduit is connected to the feeder block assembly and a second conduit is connected to an air supply source. A third conduit interconnects the mixing valve and a spray nozzle for spraying the air/lubricant mixture on the object.

The problem with such air/lubricant mixing systems is that every lubricant outlet on each of the individual base elements of the progressive lubricant feeder assembly requires a corresponding mixing valve and air supply conduit connected thereto. This requires a very complicated system of conduits and mixing valves. Further, if a blockage occurs resulting in the lubricant feeder assembly from functioning, an operator cannot tell if the blockage occurred in the lubricant feeder assembly or the mixing valve.

The invention as claimed is intended to remedy these drawbacks and the advantages offered are mainly that air and lubricant are mixed internally within the lubricant feeder assembly. This eliminates the need for mixing valves and conduits associated therewith for mixing air and lubricant. In addition, an operator will be able to detect a blockage and determine that it occurred in the feeder block assembly.

The lubricant feeder block assembly for feeding lubricant to an object, according to the invention, is of the type including support means comprising at least one support block of generally rectangular configuration and having a pair of end faces and a plurality of side faces therebetween: first aperture means and first passageway means in said support means for allowing lubricant to enter said support means; second aperture means and second passageway means on said support means for allowing lubricant to exit said support means; valve means for distributing lubricant between said first aperture means and said second aperture means, said valve means being interposed between said first and second passageway and is essentially characterized in that it further comprises third aperture means and third passageway means in said support means for allowing air to enter and be mixed with the lubricant within said support means before exiting said second aperture means.

One way for carrying out the invention is described in detail below with reference to drawings which illustrate only a specific embodiment, in which:

FIGURE 1 is a perspective view of the subject invention;

FIGURE 2 is a partial sectional view of the subject invention taken along lines 2-2 of FIGURE 1 before the operation of the first valve member;

FIGURE 3 is a partial sectional view of the subject invention taken along lines 2-2 of FIGURE 1 before the operation of the second valve member;

FIGURE 4 is a partial sectional view of the subject invention taken along lines 2-2 of FIGURE 1 before the operation of the third valve member;

FIGURE 5 is a partial sectional view of the subject invention taken along lines 5-5 of FIGURE 1;

FIGURE 6 is a partial sectional view of the subject invention taken along lines 6-6 of FIGURE 1; and

FIGURE 7 is a partial sectional view of an alternate embodiment of the fitting of FIGURE 5.

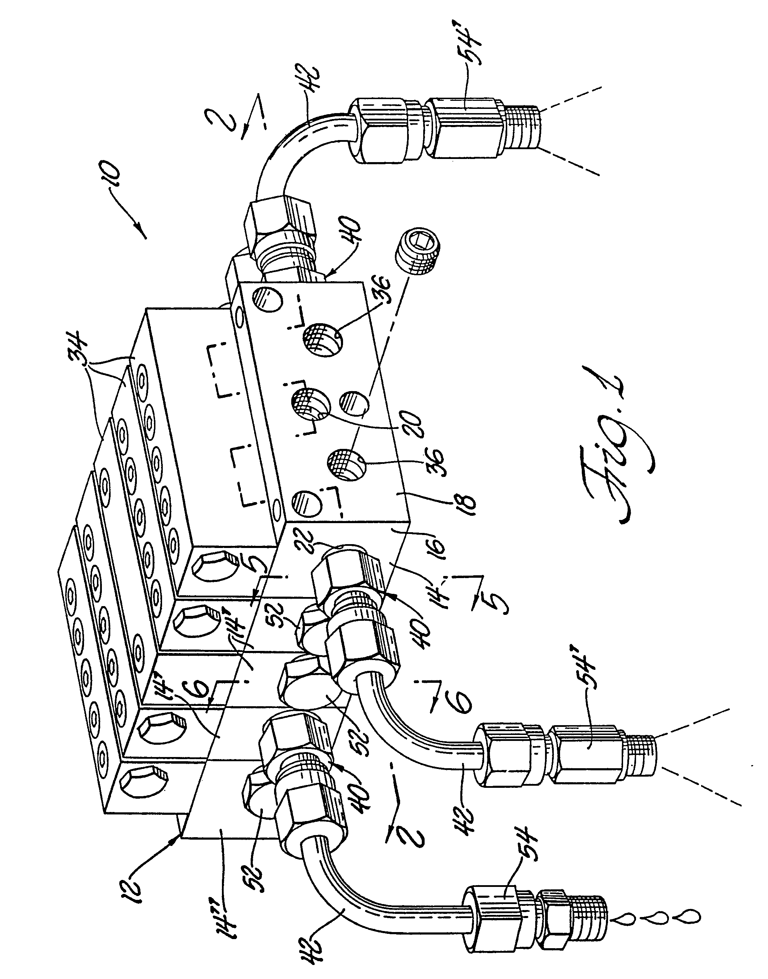

With reference to the figures, a progressive series or lubricant feeder block assembly for feeding lubricant such as oil to an object (not shown) is generally shown at 10 in Figure 1. The assembly 10 allows a predetermined amount of lubricant to be discharged in a serial manner to an object as conventionally known in the art. The assembly 10 includes support means, generally indicated at 12, forming at least one support block 14. The support means 12 comprises a plurality of support blocks 14 being generally rectangular in configuration and having a pair of end faces 16 and a plurality of side faces 18 therebetween. The support means typically includes an inlet support block 14, intermediate support blocks 14′ and an end block 14″ serially connected together. The support blocks 14, 14′, 14″ are connected together by fasteners (not shown).

The assembly 10 includes a first aperture means 20 forming at least one first aperture 20 in the support means 12 for allowing lubricant to enter the support means 12. The first aperture means 20 comprises a first aperture 20 in the side face 18 of the inlet support block 14. The first aperture 20 is threaded to allow a fitting and corresponding conduit (not shown) to be threadably engageable with the first aperture 20.

The assembly 10 also includes second aperture means 22 forming at least one, and preferably a plurality of, second apertures 22 in the support means 12 for allowing lubricant to exit the support means 12. The second aperture means 22 comprises a second aperture 22 in each of the end faces 16 of the support blocks 14, 14′, 14″. Preferably, one second aperture 22 is on each side of the first aperture 20.

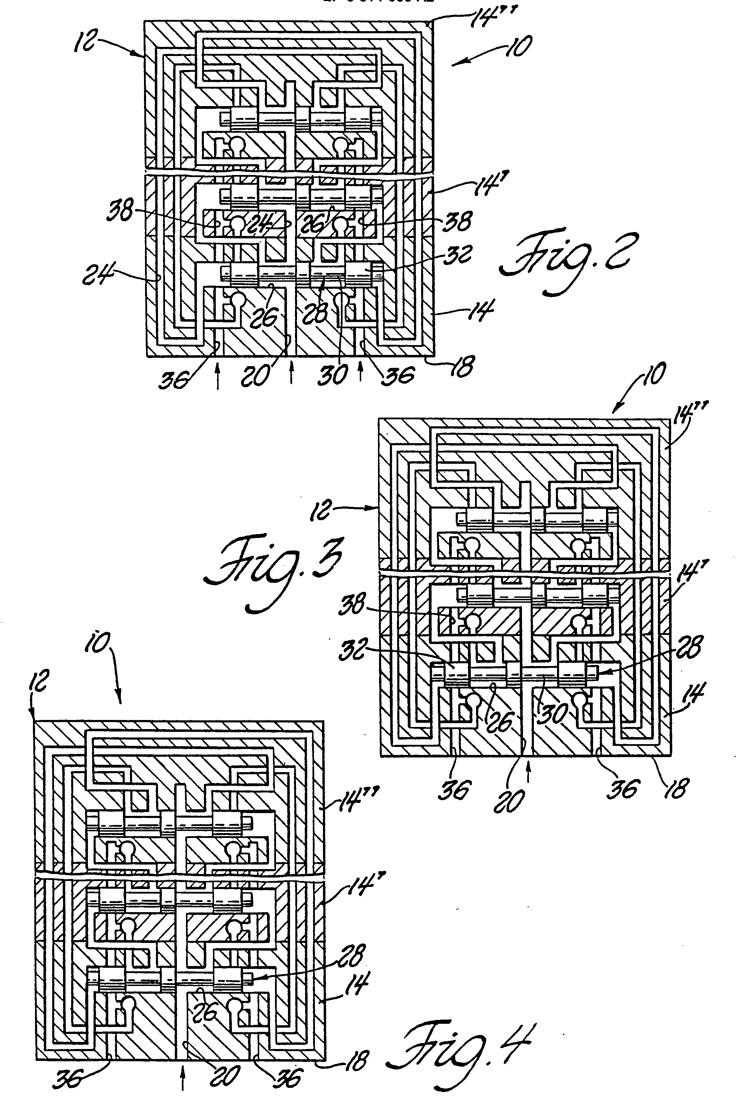

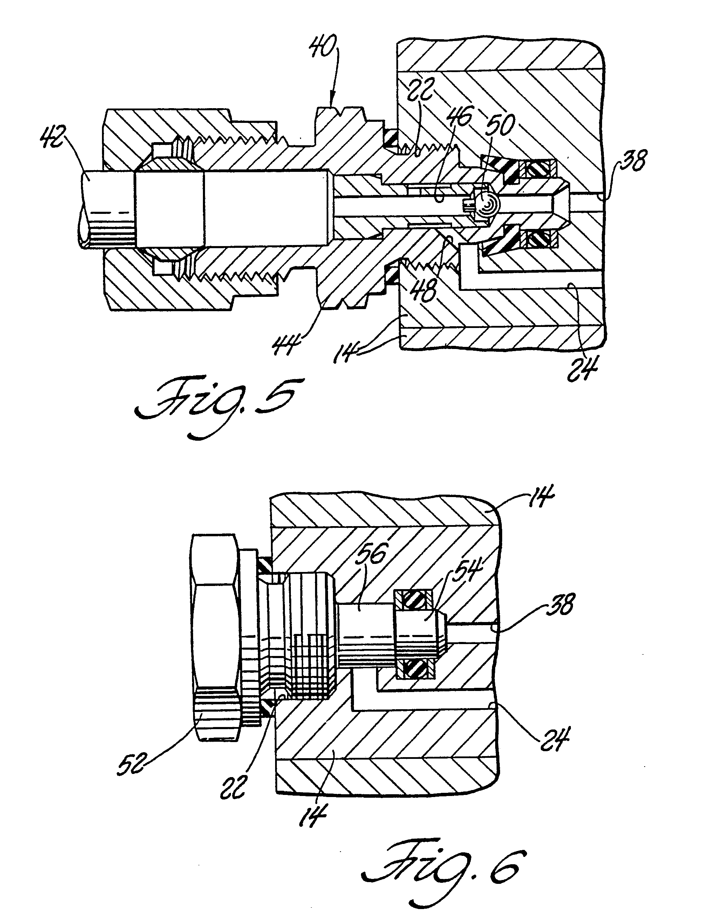

As illustrated in Figures 2 and 5, the assembly 10 further includes first passageway means 24 forming at least one, and preferably a plurality of, passageways 24 within the support means 12 to allow lubricant to flow from the first aperture 20 to the second apertures 22. The first passageway means 24 comprises a series of first passageways 24 within the support blocks 14, as illustrated in Figures 2 through 4. The first passageways 24 communicate with each other from one support block 14 to an adjacent support block 14. The first passageways 24 interconnect the first aperture 20 and a second aperture 22 to allow lubricant to flow from the first aperture 20 through the support blocks 14 and exit the second aperture 22 as conventionally known in the art.

As illustrated in Figure 1, the assembly 10 further includes metering blocks 34 connected to the support blocks 12 and communicating with the first passageways 24. The assembly 10 also includes valve means, generally indicated at 28, disposed within the metering blocks 34 for measuring a predetermined amount of lubricant and for distributing the lubricant between the first aperture 20 and the second aperture 22. The valve means 28 comprises a valve or rod member 30 having a plurality of axially spaced lobes 32. The assembly 10 includes a second passageway means 26 forming a second passageway 26 in the metering blocks 34 and communicating with the first passageways 24. In other words, a second passageway 26 is similar to a cavity and is formed in the metering blocks 34. The valve member 28 is disposed within the second passageway 26 for reciprocating movement therein. The valve means 28 and metering blocks 34 are conventional and well known in the art.

All of the above is well known in the art for comprising a series progressive lubricant feeder. The subject invention will be hereinafter described.

The support means 12 includes third aperture means 36 forming at least one, and preferably a plurality of, third apertures 36 in the support means 12 for allowing air to be mixed with the lubricant within the support means 12 before exiting the second apertures 22. The third aperture means 36 comprises a pair of third apertures 36 formed in the side face 18 of the support block 14. The first aperture 20 is disposed between the third apertures 36. The third apertures 36 are threaded to allow threaded engagement with a fitting and conduit (not shown) connected to an air supply source (now shown).

As illustrated in Figures 2 and 5, the assembly 10 also includes third passageway means 38 forming at least one third passageway 38 within the support means 12 to allow air to flow from each of the third apertures 36 to each of the second apertures 22. The third passageway means 38 comprises a pair of passageways 38. Each passageway 38 extends from one of the third apertures 36 to at least one, and preferably a plurality of, the second apertures 22.

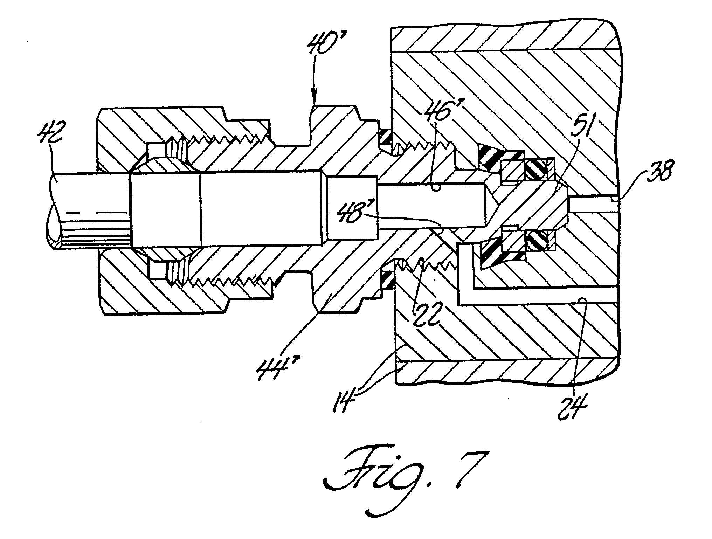

As illustrated in Figures 1 and 5, the assembly 10 further includes fitting means, generally indicated at 40, threadably engageable with the second apertures 22 for connection to a conduit 42. Preferably, the fitting means 40 comprises a fitting 44 having a central passageway 46 to allow lubricant and air to be mixed in the central passageway 46 before exiting the support block 14. The first passageway 24 communicates with the central passageway 46. A diagonal passageway 48 interconnects the first passageway 24 and central passageway 46. Third passageway 38 communicates with the central passageway 46. A ball check valve 50 is disposed in the central passageway 46 between the end of the third passageway 38 and diagonal passageway 48. As illustrated in Figure 7, a first alternate embodiment of the fitting 40, wherein like parts have prime numerals, is generally indicated at 40′. The fitting 44′ may have solid or closed at the end 51 to prevent air from entering the central passageway 46' from the third passageway 38 and from being mixed with the lubricant and to allow solely lubricant to exit the fitting 44'. In this case, the ball check valve 50 would be eliminated.

As illustrated in Figure 6, as an alternative, the assembly 10 may include a plug means threadably engageable with the second aperture 22 for preventing lubricant and air from exiting the support block 14. The plug means comprises a plug member 52 threadably engageable with the second aperture 22. The plug member 52 has a closed end 54 to prevent air from being discharged from the third passageway 38 into the second aperture 22. The plug member 52 includes an annular shoulder 56 closing the first passageway 24 to prevent lubricant from entering the second aperture 22.

As illustrated in Figure 1, the assembly 10 also includes a conduit 42 having one end connected to the fitting means 40, 40'. The assembly 10 further includes nozzle means 54, 54' connected to the other end of the conduit 42 for distributing or spraying the lubricant or lubricant/air mixture on the object.

As illustrated in Figures 2 through 4, air enters the assembly 10 at the third aperture 36 and passes through the third passageway 38 to the second aperture 22. Lubricant enters the assembly 10 at first aperture 20. The first valve member 30 is shifted to one side to exhaust a metered amount of lubricant from the support block 14. Next, the valve member 30' in the second or intermediate support block 14' shifts to the same side to distribute or exhaust a second metered amount of lubricant from the second support block 14'. This cycle is repeated for the plurality of individual support blocks connected together. The air is mixed with the lubricant internally within the central passageway 46 of the fitting 44 at second passageway 26 before exiting the support block 14.

The invention has been described in an illustrative manner, and it is to be understood that the terminology which has been used is intended to be in the nature of words of description rather than of limitation.

Obvioulsy, many modifications and variations of the present invention are possible in light of the above teachings. It is, therefore, to be understood that within the scope of the appended claims, the subject invention may be practiced otherwise than as specifically described.

**Claims**

1. A lubricant feeder block assembly (10) for feeding lubricant to an object of the type including support means (12) comprising at least one support block (14) of generally rectangular configuration and having a pair of end faces (16) and a plurality of side faces (18) therebetween; first aperture means (20) and first passageway means (24) in said support means (12) for allowing lubricant to enter said support means (12); second aperture means (22) and second passageway means (26) in said support means (12) for allowing lubricant to exit said support means (12); valve means (28, 30) for distributing lubricant between said first aperture means (20) and said second aperture means (22), said valve means (28, 30) being interposed between said first (24) and second (26) passageways characterized in that said assembly (10) further comprises third aperture means (36) and third passageway means (38) in said support means (12) for allowing air to enter and be mixed with the lubricant within said support means (12) before exiting said second aperture means (22).

2. An assembly as claimed in claim 1, characterized in that said valve means (28) comprises a valve (30) having at least one laterally spaced lobe (32), said valve being disposed within said third passageway (38) for reciprocating movement therein.

3. An assembly as claimed in claim 1, characterized in that said second aperture means (22) comprises at least one second aperture in each of said end faces (16).

4. An assembly as claimed in claim 1, characterized in that said first aperture means (20) comprises at least one first aperture in one of said side faces (18) and in that said third aperture means (36) comprises at least one third aperture in the same one of said side faces (18).

5. An assembly as claimed in claim 1, characterized in that fitting means (40, 40', 44, 44') are provided engageable with said second aperture means (22) for connecting a conduit (42).

6. An assembly as claimed in claim 5 characterized in that said fitting means (40, 40', 44, 44') comprises a central passageway (46) communicating with said third passageway (38), said first passageway (24) communicating with said central passageway (46) through a diagonal passageway (48) entering said central passageway downstream of a check valve (50).

7. An assembly as claimed in claim 6, characterized in that said check valve is substituted by a solid closure (51).

8. An assembly as claimed in claim 1, characterized in that nozzle means (54, 54') are provided in the conduit (42) exiting said second aperture means (22), said nozzle means for spraying the lubricant and air mixture on the object.

9. An assembly as claimed in claim 1, characterized in that plug means (52) are engageable with said second aperture means (22) for preventing lubricant and air from exiting said support block (14).

10. An assembly as claimed in claim 1, characterized in that said assembly further comprises metering blocks (34) each connected to a support block (14) and communicating with a respective first passageway (24), said valve means (28, 30) being disposed within each of said metering blocks (34).

*Fig.1*

EP 0 314 969 A2

Fig.2

Fig.3

Fig.4

Fig.5

Fig.6

Fig. 7